# FASCICULE DE BREVET EUROPEEN

(11) **EP 3 297 861 B1**
(45) Date de publication et mention de la délivrance du brevet: **17.02.2021**
(21) Numéro de dépôt: 16728065.0
(22) Date de dépôt: 20.05.2016
(51) Int. Cl.: B60J 1/00, B60J 10/70

(54) **VITRAGE FEUILLETE COMPRENANT UN CORDON PROFILE DE CLIPPAGE A RUBAN POLYMERIQUE SUPPLEMENTAIRE ET CORDON PROFILE**
VERBUNDGLASSCHEIBE MIT PROFILIERTEM WULST ZUM EINRASTEN MIT EINEM ZUSÄTZLICHEN POLYMERBAND UND PROFILIERTER WULST
LAMINATED GLAZING COMPRISING A PROFILED BEAD FOR SNAP-FITTING WITH AN ADDITIONAL POLYMER RIBBON AND PROFILED BEAD

(30) Priorité: 22.05.2015 FR 1554612
(43) Date de publication de la demande: 28.03.2018
(73) Titulaire: SAINT-GOBAIN GLASS FRANCE, 92400 Courbevoie (FR)
(72) Inventeur: TROMBETTA, Nicola, 12038 Savigliano (CN) (IT); DALMASSO, Giovanni, 12100 Cuneo (IT)
(74) Mandataire: Saint-Gobain Recherche
(86) Numéro de dépôt international: PCT/FR2016/051207
(87) Numéro de publication internationale: WO 2016/189238

(56) Documents cités:
- WO-A1-2013/127977
- WO-A1-2015/033202
- CN-A- 104 890 483
- US-A1- 2006 266 460
- US-A1- 2012 126 567
- US-A1- 2013 033 071

## Description

La présente invention concerne un vitrage, et notamment un vitrage de véhicule, comprenant un élément vitré feuilleté comprenant une feuille de verre extérieure, une feuille de verre intérieure et une feuille intercalaire de matière plastique située entre lesdites deux feuilles de verre.

Comme pour tout élément vitré feuilleté :
- la feuille de verre extérieure présente une face extérieure, un chant et une face intercalaire qui est orientée vers la feuille intercalaire de matière plastique,
- la feuille de verre intérieure présente une face intercalaire qui est orientée vers la feuille intercalaire de matière plastique, un chant et une face intérieure.

Le vitrage selon l'invention comporte le long d'au moins une partie d'au moins un bord un cordon profilé comportant une rainure pour le clippage d'une pièce de couverture sur ledit cordon profilé, ladite pièce de couverture comportant, vue en coupe transversale, un harpon pénétrant dans ladite rainure lors du clippage.

Il est connu en effet pour assurer le positionnement et/ou la fixation d'une pièce de couverture sur un élément vitré, d'utiliser un tel cordon profilé comportant une rainure.

Ce cordon profilé est généralement fixé à la face intérieure de l'élément vitré à l'aide d'une aile intérieure qui est collée contre cette face intérieure.

Pour une bonne adhésion de cette aile intérieure à l'élément vitré qui autorise un clippage en force dans la rainure, cette aile intérieure doit être relativement large (lorsque le cordon profilé est observé en coupe transversale, comme c'est le cas dans la majorité des documents de l'art antérieur).

L'art antérieur connaît deux types de situations :
- lorsque la pièce de couverture vient couvrir au moins la rainure en dépassant au-dessus de la face extérieure de l'élément vitré, comme par exemple dans les demandes de brevets EP 945 296, DE 3606566 ; et
- lorsque la pièce de couverture vient couvrir au moins la rainure sans dépasser au-dessus de la face extérieure de l'élément vitré, comme par exemple dans les demandes de brevets WO 2001/045974 ou WO 2001/85481 ou encore US 2006/0266460.

Dans la première situation, la pièce de couverture doit être suffisamment large, pour couvrir au moins l'aile intérieure afin qu'elle ne soit pas visible de l'extérieur et/ou une bande de masquage est réalisée plus à l'extérieure que l'aile intérieure.

Dans la seconde situation, une bande de masquage est réalisée plus à l'extérieure que l'aile intérieure pour couvrir au moins l'aile intérieure afin qu'elle ne soit pas visible de l'extérieur.

Dans la seconde situation, l'art antérieur connaît par ailleurs de la demande de brevet N° WO 2015/033202 et de l'invention de la demande de brevet N° US 2012/0126567 un cordon profilé particulier, qui ne comporte pas de lèvre située contre ledit chant dudit substrat extérieur.

Ces deux situations ont en commun que la pièce de couverture et/ou la bande de masquage sont, elles-mêmes ou ensemble, au moins aussi large que l'aile intérieure et en général plus large que l'aile intérieure ; de ce fait, le clair de vue à travers l'élément vitré est diminué.

En outre, du fait de la présence de l'aile intérieure au coin entre le chant de la feuille de verre intérieure et sa face intérieure, le cordon de colle qui permet de coller le vitrage à la carrosserie adjacente doit être positionné plus vers le centre du vitrage ; or, ce cordon de colle doit lui aussi être masqué de l'extérieur.

Ainsi, il est courant de considérer que le long du bord d'un vitrage équipé d'un cordon profilé à rainure, c'est une bande de 30 à 35 mm de large qui ne peut pas être utilisée pour permettre de laisser passer la lumière et qui diminue ainsi le clair de vue.

Il est donc important que l'aile intérieure soit la moins large possible ; elle doit tout de même être suffisamment large pour permettre une adhésion forte à la face intérieure, afin de permettre un clippage en force.

Pour la cohésion mécanique lors du clippage, il peut être important que la rainure soit positionnée avec exactitude dans l'espace.

Ceci est d'autant plus difficile lorsque le chant de ce bord bas du vitrage présente à certains endroits un rayon de courbure relativement petit.

Une difficulté supplémentaire vient du fait que, malgré toutes les précautions prises lors de la fabrication des éléments vitrés en série, la dispersion de dimensions d'un élément vitré à l'autre d'une même série (le fait que les éléments vitrés n'ont pas tous exactement les mêmes dimensions) peut être relativement grande alors que la dispersion de dimensions du cordon profilé est relativement faible.

Ceci est particulièrement le cas lorsque les éléments vitrés sont des éléments vitrés feuilletés ; les pare-brise comportent nécessairement des éléments vitrés feuilletés.

La présente invention a pour but de remédier à ces inconvénients en proposant un vitrage comportant un cordon profilé qui permet en clippage en force, et donc qui est solidement attaché à l'élément vitré, tout en permettant de maintenir très exactement le fond de la rainure à l'endroit souhaité dans l'espace, relativement à l'élément vitré, alors que ce dernier peut présenter des dimensions dispersives.

La présente invention entend ainsi proposer une solution pour permettre de plaquer la rainure, indirectement, contre une partie du chant de l'élément vitré, afin de figer la position de la rainure.

En outre, la présente invention entend proposer une solution pour augmenter l'étanchéité entre la rainure et le chant de l'élément vitré et empêcher la pénétration d'eau.

La présente invention se rapporte ainsi à un vitrage et notamment un vitrage de véhicule, selon la revendication 1. Ce vitrage comprend un élément vitré feuilleté comprenant :
- un substrat extérieur ayant une face extérieure qui fait face à un espace extérieur, une face intermédiaire à l'opposé de la face extérieure, ainsi qu'un chant périphérique,
- un substrat intérieur ayant une face intérieure qui fait face à un espace intérieur, une face intermédiaire à l'opposé de la face intérieure, ainsi qu'un chant périphérique,
- une feuille intercalaire de matière plastique située, en contact (directement au contact ou avec interposition d'une autre feuille de matière plastique), entre la face intermédiaire dudit substrat extérieur et la face intermédiaire dudit substrat intérieur,
ledit vitrage comportant le long d'au moins une partie d'au moins un bord un cordon profilé comportant une rainure pour le clippage d'une pièce de couverture sur ledit cordon profilé, ladite pièce de couverture comportant, vue en coupe transversale, un harpon pénétrant dans ladite rainure lors du clippage,
ledit cordon profilé comportant une lèvre située contre ledit chant dudit substrat extérieur,
ledit cordon profilé comportant, vu en coupe transversale, une aile intérieure située en dessous d'un bord périphérique de ladite face intérieure dudit substrat intérieur.

Ce vitrage est remarquable en ce qu'il comporte en outre un ruban polymérique situé entre ladite rainure et ledit chant dudit substrat intérieur, voire en outre entre ledit bord périphérique de ladite face intérieure et ladite aile intérieure.

Ce ruban polymérique est indépendant chimiquement du cordon profilé ; Vu en coupe transversale ledit ruban est situé sous ladite lèvre ; il est distinct de la lèvre. Il est c'est de préférence un élastomère présentant un module d'Young plus faible que celui du cordon profilé et plus faible que celui de la lèvre.

Ledit ruban polymérique est distinct de ladite rainure. Il est de préférence situé tout le long du profilé.

Ledit ruban polymérique peut être constitué d'une mousse. Cette mousse est, de préférence, étanche contre la pénétration de l'eau.

Ledit ruban polymérique est de préférence situé en contact contre ladite rainure et contre ledit chant dudit substrat intérieur, voire en outre est situé en contact contre ledit bord périphérique de ladite face intérieure et contre ladite aile intérieure.

Il est possible que le ruban polymérique s'étende entre ladite rainure et l'élément vitré jusqu'à être en contact avec le chant de la feuille intercalaire de matière plastique, voire jusqu'à être en contact avec le chant du substrat extérieur mais sur une partie seulement de la hauteur de ce chant du substrat extérieur puisque la lèvre est aussi au contact de ce chant.

Pour la fiabilité mécanique du clippage, il est préférable que ledit ruban présente une largeur entre ladite rainure et ledit chant qui est comprise entre 0,2 et 5,0 mm, voire entre 0,5 et 3,0 mm.

Ledit ruban peut être situé sous et au contact de ladite lèvre afin d'augmenter la cohésion mécanique.

Ledit ruban peut présenter, en coupe transversale, une forme de carré, de rectangle ou de L, afin de se conformer à l'espace disponible entre ladite rainure et ledit chant dudit substrat intérieur, voire en outre entre ledit bord périphérique de ladite face intérieure et ladite aile intérieure.

En particulier, ledit ruban présente de préférence, en coupe transversale, une forme de L lorsqu'il s'étend entre ledit bord périphérique de ladite face intérieure et ladite aile intérieure.

Ledit ruban est, de préférence, situé le long du bord inférieur d'un pare-brise de véhicule.

Ledit ruban, vu en coupe transversale, peut être situé entre ladite rainure et une bande d'adhésion qui est située sur ladite aile intérieure.

La pièce de couverture est une pièce destinée à être positionnée plus à l'extérieur que le cordon profilé.

Dans une variante spécifique, vu en coupe transversale, ladite face extérieure dudit substrat extérieur est libre en vis-à-vis de ladite rainure, et ladite rainure est de préférence affleurante dans la continuité de ladite face extérieure.

Dans une autre variante spécifique, ladite aile intérieure dudit cordon profilé comporte au moins un trou traversant ladite aile intérieure, ledit trou présentant de préférence une longueur comprise entre 2,0 et 50,0 mm et une largeur comprise entre 2,0 et 10,0 mm.

Ce trou peut permettre de clipper une partie inférieure, en forme de créneau, du ruban polymérique.

D'une manière complètement surprenante, il a ainsi été découvert qu'il était possible de réaliser au moins un trou dans l'aile intérieure du cordon profilé afin de lui donner un souplesse d'adaptation et que lorsque ce trou était positionné en partie basse du cordon profilé, c'est-à-dire dans une région d'un creux bas du cordon profilé lorsque celui-ci est observé selon sa longueur, cela permettait de modifier légèrement l'incurvation du cordon profilé et facilitait alors son adaptation au bord bas de l'élément vitré, même si celui-ci ne présentait pas exactement les dimensions voulues.

En outre, ce trou permet alors l'évacuation de l'eau qui peut sinon éventuellement stagner à cet endroit et être une source de salissure et qui peut endommager la cohésion de l'élément vitré qui est un élément vitré feuilleté (en particulier pour l'eau de lavage du vitrage).

Ladite bande d'adhésion permet la fixation définitive du cordon profilé à l'élément vitré après ajustement éventuel de sa position vis-à-vis de l'élément vitré, grâce à la présence du (ou des) trou(s).

De préférence, le trou (ou chaque trou) présente une section rectangulaire avec une longueur comprise entre 10,0 et 20,0 mm et une largeur comprise entre 2,0 et 6,0 mm ; de préférence, ledit ruban polymérique présente un bossage ou un créneau de forme complémentaire audit trou. Ce créneau présente alors une section rectangulaire avec une longueur comprise entre 10,0 et 20,0 mm et une largeur comprise entre 2,0 et 6,0 mm.

Lorsque ledit vitrage comporte une seule partie basse, ledit cordon profilé peut comporter un trou unique centré en longueur sur un point le plus bas dudit cordon profilé.

Lorsque ledit vitrage comporte deux parties basses, ledit vitrage comporte deux trous centrés chacun en longueur sur un point le plus bas dudit cordon profilé.

Ledit trou est, de préférence, situé à l'aplomb de ladite rainure, c'est-à-dire à l'aplomb du chant de l'élément vitré. Le fond de la rainure est continu ; il ne comporte pas de trou; ledit trou ne débouche donc pas dans ladite rainure.

Dans une variante, ladite aile intérieure comporte un tenon qui comporte lui-même un trou.

De préférence, ledit trou dudit cordon profilé vu en coupe transversale est situé entre ladite rainure et une bande d'adhésion qui est située sur ladite aile intérieure.

La présente invention se rapporte par ailleurs au cordon profilé seul, pour sa mise en œuvre dans le vitrage selon l'invention, ce cordon profilé comportant, vu en coupe transversale, une rainure pour le clippage d'une pièce de couverture sur ledit cordon profilé, une lèvre et une aile intérieure et comportant en outre un ruban polymérique qui s'étend longitudinalement dans un angle (ou un coin) entre ladite rainure et ladite aile intérieure ; ce ruban s'étend ainsi sous ladite lèvre ; il peut être au contact de cette lèvre.

Avantageusement, la présente invention permet de proposer un vitrage à cordon profilé de clippage qui est fiable, avec une partie du système de clippage qui peut s'adapter à des dispersions de dimensions de l'élément vitré : le ruban polymérique.

La présente invention permet ainsi de réaliser un système de clippage compacte, tout en étant fiable.

On décrira ci-après, à titre d'exemple non limitatif, plusieurs formes d'exécution de la présente invention, en référence aux dessins annexés sur lequel :
- la figure 1 est une vue de face (extérieure) d'un vitrage de véhicule selon l'invention comportant en partie basse un cordon profilé centré longitudinalement selon l'axe central vertical Y₀ ;
- la figure 2 est une vue de face (extérieure) d'un autre vitrage de véhicule selon l'invention comportant en partie basse un cordon profilé dont l'aile intérieure présente deux parties basses centrées longitudinalement, selon un axe vertical A ;
- la figure 3 est une vue partielle en coupe transversale selon l'axe Y₀ ou A respectivement des figures 1 et 2, d'un premier mode de réalisation du cordon profilé, la pièce de couverture étant positionnée dans le prolongement de la face extérieure de l'élément vitré ;
- la figure 4 est une vue partielle en coupe transversale d'une variante du premier mode de réalisation de la figure 3, le ruban polymérique traversant l'aile intérieure par au moins un trou ménagé dans cette aile ;
- la figure 5 est une vue partielle en coupe transversale selon l'axe Y₀ ou A respectivement des figures 1 et 2, d'un second mode de réalisation du cordon profilé, la pièce de couverture étant positionnée débordant au-dessus de la face extérieure de l'élément vitré ;
- la figure 6 est une vue partielle en coupe transversale d'une variante du second mode de réalisation de la figure 5, le ruban polymérique traversant l'aile intérieure par au moins un trou ménagé dans cette aile ;
- la figure 7 est une vue partielle en coupe transversale d'une autre variante du premier mode de réalisation de la figure 3, le ruban polymérique s'étendant en hauteur jusqu'à être en contact avec le chant du substrat extérieur ; et
- la figure 8 est une vue partielle en coupe transversale d'une autre variante du second mode de réalisation de la figure 5, le ruban polymérique s'étendant en hauteur jusqu'à être en contact avec le chant du substrat extérieur.

A l'intérieur de chaque figure les éléments en arrière plan ne sont en général pas représentés, afin de faciliter leur lecture.

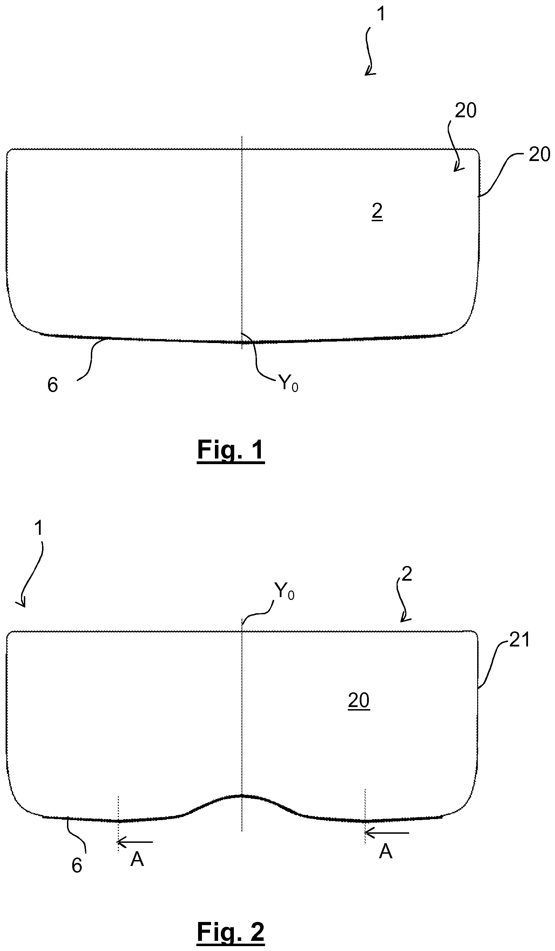

La présente invention se rapporte à un vitrage 1 de véhicule, tel que visible en figure 1 ou 2, comprenant un élément vitré 2. Ce vitrage est un vitrage fixe.

Comme ce vitrage est un vitrage de véhicule, ce vitrage réalise une séparation entre un espace extérieur E qui est extérieur au véhicule et un espace intérieur I qui est intérieur au véhicule. Les notions de « extérieur » et « intérieur » sont donc considérées par rapport respectivement à cet espace extérieur E et cet espace intérieur I.

En figures 1 et 2, le vitrage est vu de l'extérieur, orienté verticalement comme sur un véhicule.

Le vitrage 1 est destiné à fermer une baie qui est ménagée dans une carrosserie du véhicule.

Dans le cadre du présent document, la notion de « centripète » et celle de « centrifuge » est à considérer par rapport à l'axe longitudinal central d'avancé du véhicule équipé du vitrage selon l'invention en tant que pare-brise, c'est-à-dire l'axe généralement appelé « l'axe X-X' » du véhicule, qui est perpendiculaire au plan de la feuille des figures 1 et 2 ; le sens centrifuge est perpendiculaire à cet axe et en direction de cet axe alors que le sens centripète est perpendiculaire à cet axe et à l'opposé, en s'éloignant de cet axe.

En figure 1, le bord bas de l'élément vitré comporte un seule partie basse et un point le plus bas, unique, centré en longueur du vitrage (c'est-à-dire largeur du véhicule) sur un axe vertical central Y₀.

En figure 2, le bord bas de l'élément vitré comporte deux parties basses distinctes, séparées par une partie haute centrale qui est sur un axe vertical central Y₀ qui est lui-même centré en longueur du vitrage (c'est-à-dire largeur du véhicule). Les deux parties basses sont disposées symétriquement de part et d'autre de cet axe Y₀.

Chaque partie basse est centrée en longueur par rapport à un axe vertical A.

La présente invention est décrite en particulier en étant appliquée à un pare-brise de véhicule et plus précisément dans le cadre d'une application à un bord inférieur d'un pare-brise de véhicule.

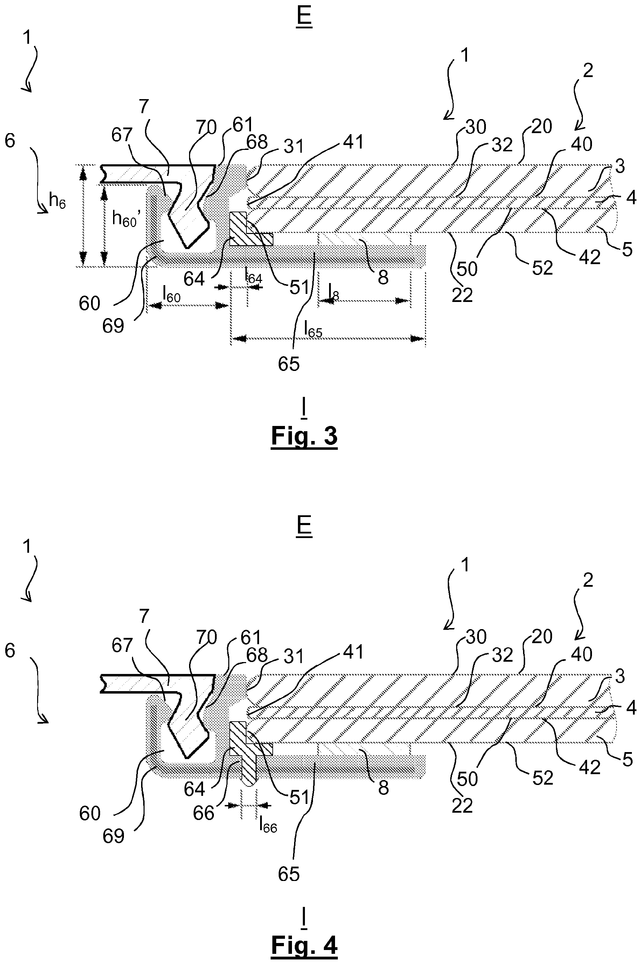

Ainsi, l'élément vitré 2 est un élément vitré feuilleté qui comprend, comme visible sur les vues en coupe transversales des figures 3 à 6, un substrat extérieur 3, un substrat intérieur 5 et une feuille intercalaire de matière plastique 4 située entre lesdits deux substrats et au contact de chacun de ces deux substrats, chaque substrat étant constitué d'une feuille de verre.

L'élément vitré 2 du vitrage 1 est un vitrage feuilleté qui comporte, de l'extérieur vers l'intérieur, au moins : le substrat extérieur 3, la feuille intercalaire de matière plastique 4 et le substrat intérieur 5 ; toutefois, il est possible qu'au moins une autre feuille soit intercalée entre le substrat extérieur 3 et la feuille intercalaire de matière plastique 4 ou entre la feuille intercalaire de matière plastique 4 et le substrat intérieur 5.

Le substrat extérieur 3 présente une face extérieure 30 qui est orientée vers l'extérieur E, une face intercalaire 32 qui est orientée vers la feuille intercalaire de matière plastique 4, et un chant 31 situé entre ces deux faces.

Le substrat intérieur 5 présente une face intercalaire 50 qui est orientée vers la feuille intercalaire de matière plastique 4, une face intérieure 52 qui est orientée vers l'intérieur I et un chant 51 situé entre ces deux faces.

La feuille intercalaire de matière plastique 4 présente une face intercalaire extérieure 40 qui est orientée vers la face intercalaire 32 et qui est ici au contact de cette face intercalaire 32, une face intercalaire intérieure 42 qui est orientée vers la face intercalaire 50 et qui est ici au contact de cette face intercalaire 50, ainsi qu'un chant 41 qui est situé entre ces deux faces intercalaires 40, 42.

L'élément vitré 2 présente ainsi une face extérieure 20 réalisée par la face extérieure 30 du substrat extérieur 3, une face intérieure 22 réalisée par la face intérieure 52 du substrat intérieur 5 et un chant situé entre ces deux faces, correspondant au chant 31 du substrat extérieur 3, au chant 41 de la feuille de matière plastique 4 et au chant 51 du substrat intérieur 5, ces trois chants étant ici dans la continuité l'un de l'autre.

Le vitrage 1 comporte, outre l'élément vitré 2, le long d'au moins une partie d'au moins un bord bas un cordon profilé 6 comportant une rainure 60 pour le clippage d'une pièce de couverture 7 sur ledit cordon profilé 6, ladite pièce de couverture 7 comportant, vue en coupe transversale, un harpon 70 pénétrant dans ladite rainure 60 lors du clippage.

La rainure 60 présente une embouchure et un fond : lors du clippage de la pièce de couverture 7, le harpon 70 pénètre dans la rainure 60 par l'embouchure et en direction du fond ; généralement, dans la position clippée, le harpon 70 ne touche pas le fond de la rainure.

L'embouchure de la rainure, par laquelle est introduit le harpon 70, est réalisée par deux avaloirs : un avaloir centrifuge 67, situé à gauche du harpon 70 sur les figures 3 à 6 et un avaloir centripète 68, situé à droite du harpon 70 sur ces mêmes figures. Ces deux avaloirs ont pour but de guider le harpon 70 avec précision vers le fond de la rainure 60 lors du clippage du harpon 70.

La pièce de couverture 7 est destinée à être positionnée plus à l'extérieur que le cordon profilé 6 et à le couvrir au moins en partie lorsque le vitrage 1 est vu de l'extérieur E.

La rainure 60 est latérale : la rainure 60 du cordon profilé s'étend le long du bord inférieur de l'élément vitré, en vis-à-vis du chant de l'élément vitré 2 lorsque l'élément vitré est considéré installé dans la baie. Dans l'absolu, la rainure 60 pourrait être située en vis-à-vis d'une partie seulement du chant 21 de l'élément vitré 2 : par exemple, en vis-à-vis du chant 41 et du chant 51 mais pas en vis-à-vis du chant 31.

L'embouchure de la rainure est orientée vers l'extérieure.

Le fond de la rainure 60 peut être situé plus à l'intérieur que la face intérieure 22 de l'élément vitré ; cela ne gêne pas le positionnement du vitrage dans la baie de la carrosserie car il y a de la place sous la face intérieure 22.

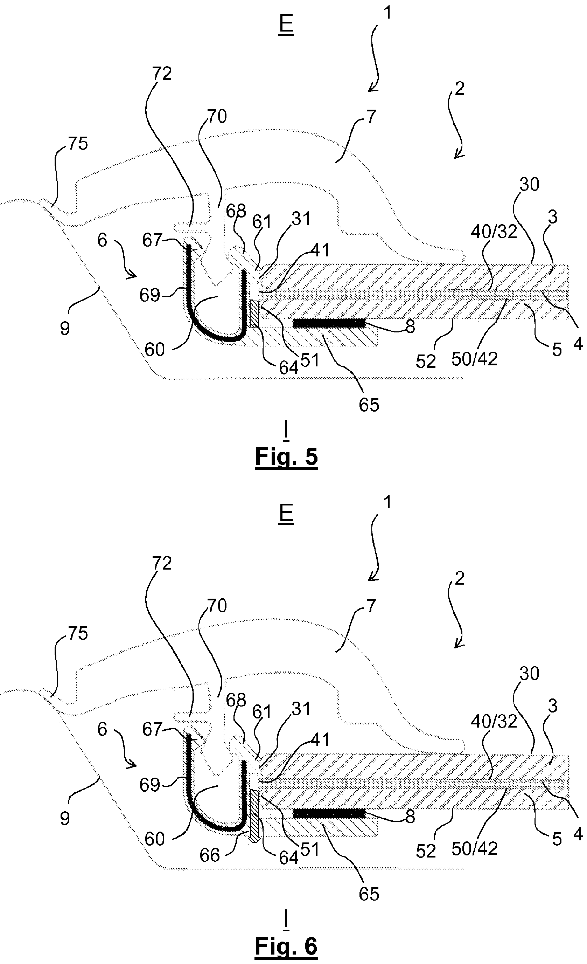

Les deux avaloirs de l'embouchure de la rainure sont chacun en forme de marteau avec les têtes presque en face l'une de l'autre, l'avaloir centrifuge 67 étant situé légèrement plus à l'intérieur que l'avaloir centripète 68 dans le mode de réalisation des figures 3 et 4 alors que l'avaloir centrifuge 67 est situé légèrement plus à l'extérieur que l'avaloir centripète 68 dans le mode de réalisation des figures 5 et 6.

Le harpon est double : il est constitué, vu en coupe transversale, de deux bossages orientés à l'opposé l'un de l'autre et décalé, le bossage centrifuge, destiné à venir sous l'avaloir centrifuge 67 étant situé légèrement plus à l'extérieur que le bossage centripète destiné à venir sous l'avaloir centripète 68.

Le clippage consiste ainsi en la pénétration du harpon 70 à l'intérieur de la rainure 60 et plus précisément des deux bossages du harpon à l'intérieur de la rainure 60 et sous les deux avaloirs.

Pour une retenue correcte, la largeur de l'embouchure, au plus court entre les deux avaloirs est inférieure à la largeur des deux bossages au plus large.

La matière constitutive de la rainure 60 peut être renforcée par la présence, à l'intérieur, d'un tenon 69, comme par exemple un insert métallique, qui permet d'augmenter la rigidité de la rainure. Ce tenon peut être par exemple un profilé en aluminium d'une épaisseur de 0,4 mm. Il augmente la rigidité de la rainure 60.

Le cordon profilé 6 comporte, vu en coupe transversale, une aile intérieure 65 située en dessous de ladite face intérieure 22 de l'élément vitré.

Ladite aile intérieure 65 est venue de matière avec la rainure 60 ; elle est située à proximité du fond de la rainure, en dehors de celle-ci et s'étend vers l'intérieur et vers le haut (lorsque le pare-brise est considéré monté dans la baie de carrosserie).

Sur les figures 3 à 6, le cordon profilé 6 est illustré en coupe très exactement dans une partie basse de ce cordon profilé.

Ainsi, en lien avec la figure 1, la vue en coupe est centrée en longueur sur un point le plus bas de l'élément vitré, c'est-à-dire sur l'axe Y₀. C'est aussi le point le plus bas du cordon profilé.

Selon l'invention, le vitrage 1 comporte en outre un ruban 64 polymérique situé entre ladite rainure 60 et ledit chant 51 dudit substrat intérieur 5, comme visible en figures 4 à 6, voire en outre entre ledit bord périphérique de ladite face intérieure 52 et ladite aile intérieure 65, comme visible en figures 4 et 5 seulement.

Le ruban 64 s'étend le long du bord inférieur de l'élément vitré 2, en contact, tout le long du cordon profilé, au moins d'une part avec la rainure 60 et d'autre part avec le chant 51.

Lorsque le cordon profilé est fixé à l'élément vitré, le ruban polymérique peut être plus ou moins compressé afin de s'adapter aux dispersions de dimensions qui peuvent être constatées entre la position de référence du chant du substrat intérieur et sa position réelle.

Sur les figures 3 et 4, le ruban 64 présente, vu en coupe transversale, une forme de L, orientée verticalement, avec :
- la base du L située sous le bord périphérique de la face intérieure 52, entre cette face intérieure 52 et l'aile intérieure 65, au contact tant de cette face intérieure 52 que de l'aile intérieure 65 ;
- l'aile du L située entre le chant 51 et la rainure 60, au contact tant de ce chant 51 que de la rainure 60.

Vu en coupe transversale, le ruban 64 présente une largeur l₆₄ entre ladite rainure 60 et le chant 51 qui est comprise entre 0,5 et 5,0 mm et qui est ici précisément de 2,0 mm. Ce sont les dimensions qui donnent la meilleure flexibilité au cordon profilé et la meilleure capacité d'étanchéité.

Toutefois, avant que le cordon profilé 6 soit collé à la face intérieure 52, le ruban 64 présente de préférence une largeur plus élevé : le ruban 64 est ainsi comprimé entre la rainure 60 et le chant 51. Le taux de compression en largeur peut être compris entre 5 % et 75 %. Il est ici de 50 %, c'est-à-dire qu'à l'état non comprimé le ruban présente une largeur double, de 4,0 mm.

Vu en coupe transversale, la face extérieure 20 de l'élément vitré 2 est, de préférence libre en vis-à-vis de ladite rainure 60.

Le cordon profilé 6 est préfabriqué : il est fabriqué par extrusion au travers d'une filière d'extrusion, puis est incurvé selon sa longueur pour se conformer avec la forme générale de la partie basse de l'élément vitré suivant sa longueur.

Le ruban 64 est également préfabriqué : il est de préférence fabriqué simultanément avec le cordon profilé par co-extrusion au travers d'une filière d'extrusion unique.

L'élément vitré 2 est fabriqué avant la fixation du cordon profilé 6 à l'élément vitré 2, c'est-à-dire que le feuilletage des substrats 3, 5 en verre avec la feuille intercalaire de matière plastique afin de former un vitrage feuilleté est opéré avant la fixation du cordon profilé 6 à l'élément vitré 2.

Pour fixer le cordon profilé 6 à l'élément vitré 2, il est recommandé :
- de positionner la lèvre 61 contre le chant 31 du substrat extérieur 3,
- puis de positionner le ruban 64 contre le chant 51 du substrat intérieur 5 en pressant manuellement, voire avec un automate, la rainure 60 contre le chant 51 à cet endroit et en écrasant ainsi le ruban 64,
- puis de faire adhérer le cordon profilé à l'élément vitré 2 en pressant la bande d'adhésion contre la face intérieure 52.

Cette adhésion peut être réalisée à l'aide d'une bande d'adhésion 8 formée par une couche de colle ou un ruban adhésif et notamment un ruban adhésif double face, qui est située sur la face extérieure de l'aile intérieure.

L'aile intérieure 65 présente une largeur l₆₅, illustrée en figure 3, comprise entre 5,0 et 20,0 mm, voire comprise entre 8,0 et 15,0 mm, notamment de 12 mm. Cette largeur est suffisante pour permettre un bon maintien de l'aile intérieure contre le substrat intérieur.

Dans le mode de réalisation illustré en figures 3 et 4, la pièce de couverture 7 est destinée à être positionnée plus à l'extérieur que le cordon profilé 6 et à le couvrir en partie seulement lorsque le vitrage 1 est vu de l'extérieur E ; le haut de l'avaloir centrifuge 68 constitue la lèvre 61 dont la face extérieure est à la fois dans la continuité (« flush ») de la face extérieure 20 de l'élément vitré et dans la continuité (« flush ») de la face extérieure de la pièce de couverture 7.

L'avaloir centripète 67 est situé moins à l'extérieur que l'avaloir centrifuge 68 afin que lorsque la pièce de couverture 7 est clippée dans la rainure 60 une face extérieure de la pièce de couverture 7 soit dans la continuité de la surface extérieure 30 du substrat extérieur 3 ; la pièce de couverture est « flush » avec le substrat extérieur 3 par l'intermédiaire du cordon profilé 6 « flush » à la fois avec la face extérieure de l'élément vitré et avec la face extérieure de la pièce de couverture.

En référence à la figure 3, le cordon profilé présente une hauteur hors tout h₆ d'environ 7,8 mm et la rainure 60 présente une hauteur h_{60'} d'environ 5,5 mm et une largeur l₆₀ d'environ 5,0 mm.

Le tenon 69 est plat dans l'espace situé sous la face intérieure 22 et se poursuit à l'intérieur de la matière constitutive de la rainure 60 dans la portion de cette rainure qui est à l'opposé de celle qui est contre le chant, afin de rigidifier encore plus l'aile intérieure 65.

Dans le mode illustré en figure 5, la pièce de couverture 7 est destinée à être positionnée plus à l'extérieur que le cordon profilé 6 et à le couvrir complètement lorsque le vitrage 1 est vu de l'extérieur E. Il s'agit ici, dans le cadre de l'application à un bord bas d'un pare-brise, d'une pièce destinée à enjoliver le bord du vitrage et positionnée contre la feuillure 9 grâce à la présence d'une lèvre 75. Il peut s'agir d'un enjoliveur.

Dans ce second mode par ailleurs, les deux avaloirs sont situés plus à l'extérieur que la face extérieure 20 de l'élément vitré ; ils sont situés au-dessus de cette face extérieure 20 lorsque le prolongement de cette face au-delà du chant 31 est considéré.

Sur la figure 5, le ruban 64 présente, vu en coupe transversale, une forme rectangulaire, orientée verticalement.

L'aile intérieure 65 est une aile simple, réalisée dans le même matériau et venue de matière avec la rainure 60, sans renfort.

Un bord de la baie que le vitrage 1 doit fermer - en l'occurrence un bord inférieur - est illustré en figure 5 par une feuillure 9.

La figure 5 illustre par ailleurs une variante indépendante dans laquelle le harpon 70 comporte, vue en coupe transversale, une butée frontale 72 située en dehors de ladite rainure 60.

Cette butée frontale 72 est ici centrifuge et se trouve contre l'avaloir centrifuge 67 lors du clippage, mais elle pourrait être centripète et se trouver contre l'avaloir centripète 68 lors du clippage ; elle a pour but de limiter la pénétration du harpon 70 à l'intérieur de la rainure 60.

De préférence, comme visible sur la figure 5, le fond de la rainure 60 ne forme pas un U symétrique, mais un U asymétrique, avec un rayon de courbure plus grand du côté de la feuillure 9, qui permet de diminuer l'encombrement de la rainure vis-à-vis de la feuillure adjacente.

Plus particulièrement, l'utilisation d'une rainure à fond asymétrique avec un rayon de courbure plus grand du côté de la feuillure permet d'augmenter l'inclinaison de la feuillure dans sa partie adjacente au chant de l'élément vitré d'un angle de l'ordre de 20 ° et diminuer alors la distance d entre la feuillure 9 et le fond centrifuge de la rainure, d'une valeur d'environ 9 mm à une valeur plus petite d'environ 4,5 mm. Cela représente un gain de place important et permet ainsi de rendre le système de clippage plus compact et d'augmenter la taille du vitrage.

Dans ce second mode, une bande de masquage (non illustrée) située plus à l'extérieur que l'aile intérieure et d'une largeur de 20 mm en partant du chant de l'élément vitré suffira à masquer à la fois l'aile intérieure et le cordon de colle (non illustré) permettant la fixation du vitrage à la carrosserie.

Les figures 4 et 6 illustrent respectivement une variante des figures 3 et 5 pour laquelle le ruban polymérique n'est pas fabriqué par co-extrusion en même temps que le cordon profilé, mais est fabriqué indépendamment du cordon profilé, puis clippé sur le cordon profilé.

Dans cette variante, l'aile intérieure 65 comporte au moins dans une partie basse du cordon profilé, au moins un trou 66 traversant ladite aile intérieure 65. Ce trou traverse l'aile de part en part : il débouche à la fois sur une surface extérieure de l'aile intérieure et sur une surface intérieure de l'aile intérieure.

En figure 4, le tenon 69 est traversé par le trou 66 qui traverse l'aile intérieure 65.

Le trou 66 permet d'introduire un créneau ménagé dans une face intérieure du ruban polymérique, afin que ce créneau traverse l'aile intérieure pour maintenir le ruban vis-à-vis de l'aile intérieure 65.

Sur les figures 4 et 6, le vitrage 1 est illustré en coupe très exactement dans une partie basse de ce vitrage, là où est situé un trou 66.

Ainsi, en lien avec la figure 1, le trou 66 de l'aile intérieure est unique et est centré en longueur sur un point le plus bas de l'élément vitré, c'est-à-dire sur l'axe Y₀. C'est aussi le point le plus bas du cordon profilé.

En lien avec la figure 2, il y a deux trous 66 dans l'aile intérieure, chacun étant centré en longueur sur un point le plus bas de l'élément vitré, c'est-à-dire sur l'axe A.

Il est possible d'ajouter d'autres trous, en particulier pour favoriser l'attachement du ruban polymérique 64 au cordon profilé 6.

Le trou 66 présente de préférence une longueur comprise entre 2,0 et 50,0 mm et une largeur l₆₆ comprise entre 2,0 et 10,0 mm ; Le créneau du ruban polymérique présente alors lui-aussi une longueur comprise entre 2,0 et 50,0 mm et une largeur l₆₆ comprise entre 2,0 et 10,0 mm.

A titre d'exemple préférentiel, le trou 66 peut présenter une section rectangulaire avec une longueur comprise entre 10,0 et 20,0 mm, notamment de 15,0 mm et une largeur l₆₆ comprise entre 2,0 et 6,0 mm, notamment de 4,0 mm ; Le créneau du ruban polymérique présente alors lui-aussi une longueur comprise entre 10,0 et 20,0 mm, notamment de 15,0 mm et une largeur comprise entre 2,0 et 6,0 mm, notamment de 4,0 mm.

Le trou 66 est situé à l'aplomb de la rainure 60, c'est-à-dire juste à la jonction entre l'aile intérieure 65 et la rainure 60 ; Le créneau du ruban polymérique est alors lui-aussi situé à l'aplomb de la rainure 60, c'est-à-dire juste à la jonction entre l'aile intérieure 65 et la rainure 60.

Vu en coupe transversale, le trou 66 est situé entre la rainure 60 et la bande d'adhésion 8 qui est située sur ladite aile intérieure 65.

En figure 6, le créneau présente exactement la même largeur que le ruban polymérique.

Que le cordon polymérique présente ou non au moins un créneau, lorsqu'il est fabriqué indépendamment du cordon profilé 6, il peut être collé au cordon profilé par une couche de colle.

Sur les figures 3 à 6, la lèvre 61 du cordon profilé 6 qui est en contact avec le chant 31 du substrat extérieur est venue de matière avec la rainure 60 ; toutefois, il est possible que la lèvre 61 soit en un matériau différent de celui de la rainure ; dans ce cas, elle peut aussi être fabriquée par co-extrusion simultanément à la fabrication de la rainure 60 et du ruban 64.

Lorsque le cordon profilé 6 est considéré seul, sans l'élément vitré, le ruban 64 s'étend longitudinalement dans un angle entre la rainure 60 et l'aile intérieure 65.

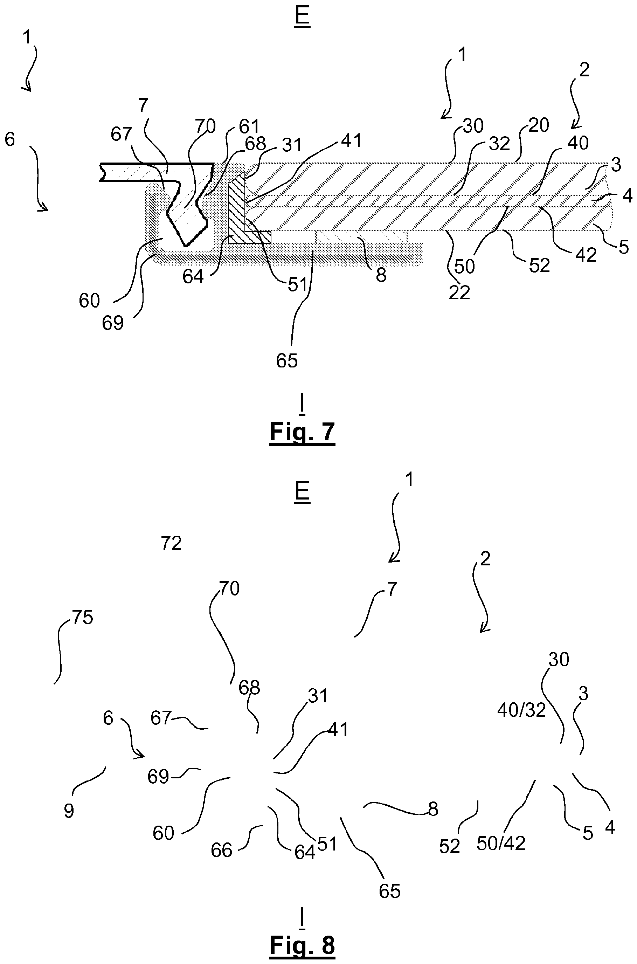

Les figures 7 et 8 illustrent respectivement une autre variante des figures 3 et 5 pour laquelle le ruban 64 polymérique s'étend le long la totalité du chant de l'élément vitré 2, c'est-à-dire que le ruban 64 est en contact avec le chant 41 de la feuille intercalaire de matière plastique 4 mais aussi le chant 51 du substrat intérieur 5 et le chant 31 du substrat extérieur 3 ; toutefois, le ruban 64 est en contact d'une partie seulement de la hauteur de ce chant 51 du substrat extérieur puisque la lèvre 61 est aussi au contact de ce chant.

## Revendications

1. Vitrage (1) et notamment vitrage de véhicule, comprenant un élément vitré (2) feuilleté comprenant :
- un substrat extérieur (3) ayant une face extérieure (30) qui fait face à un espace extérieur (E), une face intermédiaire (32) à l'opposé de la face extérieure, ainsi qu'un chant périphérique (31),
- un substrat intérieur (5) ayant une face intérieure (52) qui fait face à un espace intérieur (I), une face intermédiaire (50) à l'opposé de la face intérieure, ainsi qu'un chant périphérique (51),
- une feuille intercalaire de matière plastique (4) située, en contact, entre la face intermédiaire (32) dudit substrat extérieur (3) et la face intermédiaire (50) dudit substrat intérieur (5),
ledit vitrage (1) comportant le long d'au moins une partie d'au moins un bord un cordon profilé (6) comportant une rainure (60) pour le clippage d'une pièce de couverture (7) sur ledit cordon profilé (6), ladite pièce de couverture (7) comportant, vue en coupe transversale, un harpon (70) pénétrant dans ladite rainure (60) lors du clippage,
ledit cordon profilé (6) comportant une lèvre (61) située contre ledit chant (31) dudit substrat extérieur (3),
ledit cordon profilé (6) comportant, vu en coupe transversale, une aile intérieure (65) située en dessous d'un bord périphérique de ladite face intérieure (52) dudit substrat intérieur (5),
**caractérisé en ce qu'**il comporte en outre un ruban (64) polymérique situé entre ladite rainure (60) et ledit chant (51) dudit substrat intérieur (5), voire en outre entre ledit bord périphérique de ladite face intérieure (52) et ladite aile intérieure (65).

2. Vitrage suivant la revendication 1, **caractérisé en ce que** ledit ruban (64) présente une largeur (l₆₄) entre ladite rainure (60) et ledit chant (51) qui est comprise entre 0,2 et 5,0 mm, voire entre 0,5 et 3,0 mm.

3. Vitrage suivant la revendication 1 ou la revendication 2, **caractérisé en ce que** ledit ruban (64) est situé sous et au contact de ladite lèvre (61).

4. Vitrage suivant l'une quelconque des revendications 1 à 3, **caractérisé en ce que** ledit ruban (64) est en contact avec ledit chant (31) dudit substrat extérieur (3).

5. Vitrage suivant l'une quelconque des revendications 1 à 4, **caractérisé en ce que** ledit ruban (64) présente, en coupe transversale, une forme de carré, de rectangle ou de L.

6. Vitrage suivant l'une quelconque des revendications 1 à 5, **caractérisé en ce que** ledit ruban (64) est situé le long du bord inférieur d'un pare-brise de véhicule.

7. Vitrage suivant l'une quelconque des revendications 1 à 6, **caractérisé en ce que** ledit ruban (64), vu en coupe transversale, est situé entre ladite rainure (60) et une bande d'adhésion (8) qui est située sur ladite aile intérieure (65).

8. Vitrage suivant l'une quelconque des revendications 1 à 7, **caractérisé en ce que** ladite aile intérieure (65) dudit cordon profilé (6) comporte au moins un trou (66) traversant ladite aile intérieure (65), ledit trou (66) présentant de préférence une longueur comprise entre 2,0 et 50,0 mm et une largeur (l₆₆) comprise entre 2,0 et 10,0 mm.

9. Vitrage suivant l'une quelconque des revendications 1 à 8, **caractérisé en ce que,** vu en coupe transversale, ladite face extérieure (30) dudit substrat extérieur (3) est libre en vis-à-vis de ladite rainure (60), et ladite rainure est de préférence affleurante dans la continuité de ladite face extérieure (30).

10. Vitrage suivant l'une quelconque des revendications 1 à 9, **caractérisé en ce que** ledit ruban (64) polymérique s'étend longitudinalement dans un angle entre ladite rainure (60) et ladite aile intérieure (65).

## Patentansprüche

1. Glasscheibe (1) und insbesondere Fahrzeugglasscheibe, umfassend ein Verbundglaselement (2), umfassend:
- ein äußeres Substrat (3) mit einer Außenseite (30), die einem Außenraum (E) zugewandt ist, einer Zwischenseite (32) gegenüber der Außenseite sowie einem Umfangsrand (31),
- ein inneres Substrat (5) mit einer Innenseite (52), die einem Innenraum (I) zugewandt ist, einer Zwischenseite (50) gegenüber der Innenseite und einem Umfangsrand (51),
- eine Zwischenscheibe aus Kunststoffmaterial (4), die, in Kontakt, zwischen der Zwischenseite (32) des äußeren Substrats (3) und der Zwischenseite (50) des inneren Substrats (5) angeordnet ist,
wobei die Glasscheibe (1) entlang mindestens eines Teils mindestens einer Kante einen profilierten Wulst (6) aufweist, der eine Nut (60) zum Einrasten eines Abdeckteils (7) an dem profilierten Wulst (6) aufweist, wobei das Abdeckteil (7) im Querschnitt betrachtet eine Harpune (70) aufweist, die während des Einrastens in die Nut (60) eindringt,
wobei der profilierte Wulst (6) eine Lippe (61) aufweist, die an dem Rand (31) des äußeren Substrats (3) anliegt,
wobei der profilierte Wulst (6), im Querschnitt betrachtet, einen inneren Schenkel (65) aufweist, der unterhalb einer Umfangskante der Innenseite (52) des inneren Substrats (5) angeordnet ist,
**dadurch gekennzeichnet, dass** sie ferner ein Polymerband (64) aufweist, das zwischen der Nut (60) und dem Rand (51) des inneren Substrats (5), ferner sogar zwischen der Umfangskante der Innenseite (52) und dem inneren Schenkel (65) angeordnet ist.

2. Glasscheibe nach Anspruch 1, **dadurch gekennzeichnet, dass** das Band (64) eine Breite (l₆₄) zwischen der Nut (60) und dem Rand (51) aufweist, die zwischen 0,2 und 5,0 mm, sogar zwischen 0,5 und 3,0 mm liegt.

3. Glasscheibe nach Anspruch 1 oder Anspruch 2, **dadurch gekennzeichnet, dass** das Band (64) unter oder in Kontakt mit der Lippe (61) angeordnet ist.

4. Glasscheibe nach einem der Ansprüche 1 bis 3, **dadurch gekennzeichnet, dass** das Band (64) mit dem Rand (31) des äußeren Substrats (3) in Kontakt steht.

5. Glasscheibe nach einem der Ansprüche 1 bis 4, **dadurch gekennzeichnet, dass** das Band (64), im Querschnitt betrachtet, quadratisch, rechteckig oder L-förmig ist.

6. Glasscheibe nach einem der Ansprüche 1 bis 5, **dadurch gekennzeichnet, dass** das Band (64) entlang der Unterkante einer Fahrzeugwindschutzscheibe angeordnet ist.

7. Glasscheibe nach einem der Ansprüche 1 bis 6, **dadurch gekennzeichnet, dass** das Band (64), im Querschnitt betrachtet, zwischen der Nut (60) und einem Haftband (8), das sich auf dem inneren Schenkel (65) befindet, angeordnet ist.

8. Glasscheibe nach einem der Ansprüche 1 bis 7, **dadurch gekennzeichnet, dass** der innere Schenkel (65) des profilierten Wulstes (6) mindestens ein Loch (66) aufweist, das durch den inneren Schenkel (65) hindurchgeht, wobei das Loch (66) vorzugsweise eine Länge zwischen 2,0 und 50,0 mm und eine Breite (l₆₆) zwischen 2,0 und 10,0 mm aufweist.

9. Glasscheibe nach einem der Ansprüche 1 bis 8, **dadurch gekennzeichnet, dass,** im Querschnitt betrachtet, die Außenseite (30) des äußeren Substrats (3) gegenüber der Nut (60) frei ist, und die Nut vorzugsweise in Fortsetzung der Außenseite (30) bündig ist.

10. Glasscheibe nach einem der Ansprüche 1 bis 9, **dadurch gekennzeichnet, dass** das Polymerband (64) sich in Längsrichtung in einem Winkel zwischen der Nut (60) und dem inneren Schenkel (65) erstreckt.

## Claims

1. A glazing (1) and in particular a vehicle glazing, comprising a laminated glazed element (2) comprising:
- an exterior substrate (3) having an exterior face (30) which faces an exterior space (E), an intermediate face (32) opposite the exterior face, and a peripheral edge face (31) ,
- an interior substrate (5) having an interior face (52) which faces an interior space (I), an intermediate face (50) opposite the interior face, and a peripheral edge face (51) ,
- a plastic interlayer (4) situated between and in contact with the intermediate face (32) of said exterior substrate (3) and the intermediate face (50) of said interior substrate (5),
said glazing (1) comprising along at least part of at least one edge a profiled strip (6) comprising a groove (60) for the clip-fastening of a cover piece (7) to said profiled strip (6), said cover piece (7) comprising, viewed in cross section, a barbed hook (70) that enters said groove (60) during clip-fastening,
said profiled strip (6) comprising a lip (61) situated against said edge face (31) of said exterior substrate (3),
said profiled strip (6) comprising, viewed in cross section, an interior flange (65) situated underneath a peripheral edge of said interior face (52) of said interior substrate (5),
**characterized in that** it further comprises a polymer tape (64) situated between said groove (60) and said edge face (51) of said interior substrate (5), or even also between said peripheral edge of said interior face (52) and said interior flange (65).

2. The glazing as claimed in claim 1, **characterized in that** said tape (64) has a width (l₆₄) between said groove (60) and said edge face (51) which is comprised between 0.2 and 5.0 mm, or even between 0.5 and 3.0 mm.

3. The glazing as claimed in claim 1 or claim 2, **characterized in that** said tape (64) is situated underneath and in contact with said lip (61).

4. The glazing as claimed in any one of claims 1 to 3, **characterized in that** said tape (64) is in contact with said edge face (31) of said exterior substrate (3).

5. The glazing as claimed in any one of claims 1 to 4, **characterized in that** said tape (64) has, in cross section, the shape of a square, a rectangle or an L.

6. The glazing as claimed in any one of claims 1 to 5, **characterized in that** said tape (64) is situated along the lower edge of a vehicle windshield.

7. The glazing as claimed in any one of claims 1 to 6, **characterized in that** said tape (64), viewed in cross section, is situated between said groove (60) and an adhesive band (8) which is situated on said interior flange (65).

8. The glazing as claimed in any one of claims 1 to 7, **characterized in that** said interior flange (65) of said profiled strip (6) comprises at least one hole (66) passing through said interior flange (65), said hole (66) preferably having a length comprised between 2.0 and 50.0 mm and a width (l₆₆) comprised between 2.0 and 10.0 mm.

9. The glazing as claimed in any one of claims 1 to 8, **characterized in that,** viewed in cross section, said exterior face (30) of said exterior substrate (3) is free with respect to said groove (60), and said groove is preferably flush in the continuity of said exterior face (30).

10. The glazing as claimed in any one of claims 1 to 9, **characterized in that** said polymer tape (64) extends longitudinally in the corner between said groove (60) and said interior flange (65).
